# EUROPEAN PATENT SPECIFICATION

(11) **EP 2 717 654 B1**
(45) Date of publication and mention of the grant of the patent: **07.03.2018**
(21) Application number: 11866848.2
(22) Date of filing: 31.05.2011
(51) Int. Cl.: H05B 37/02, H05B 33/08

(54) **ILLUMINATING APPARATUS AND BRIGHTNESS CONTROL METHOD**
BELEUCHTUNGSVORRICHTUNG UND HELLIGKEITSSTEUERUNGSVERFAHREN
APPAREIL D'ÉCLAIRAGE ET PROCÉDÉ DE COMMANDE DE LA LUMINOSITÉ

(43) Date of publication of application: 09.04.2014
(73) Proprietor: Pioneer Corporation, Tokyo 113-0021 (JP)
(72) Inventor: TSUJI, Taishi, Kawasaki-shi Kanagawa 212-0031 (JP)
(74) Representative: Manitz Finsterwald Patentanwälte PartmbB
(86) International application number: PCT/JP2011/062469
(87) International publication number: WO 2012/164683

(56) References cited:
- JP-A- 2009 289 622
- JP-A- 2010 176 986
- JP-A- 2011 033 814
- JP-A- 2011 060 574

## Description

### Technical Field

The present invention relates to a lighting device which comprises a light emitting part including a plurality of light emitting elements and which can adjust luminance and a luminance adjusting method.

### Background Art

There have been proposed lighting devices which use organic EL (Electro Luminescence) elements as their light emitting source. Lighting devices using organic EL elements (organic EL lighting devices) are characterized by surface emission with no restriction on the shape, and this characteristic cannot be obtained with other lighting devices such as LED lighting devices. Hence, further development for practical use thereof in the future is being expected.

One way to enable organic EL lighting devices to be used in the same way as conventional lighting devices having an electric light bulb or a fluorescent tube as their light emitting source is luminance (brightness) adjustment. In organic EL lighting devices, in order to adjust the luminance of the light emitting face, a control part usually adjusts drive voltages applied to, or drive currents flowing through, the organic EL elements according to operation (refer to Patent Literature 1).

A display device comprising a plurality of light emitter units is disclosed in JP 2011 033814 A. The light emitter units of the display device each comprise a first, a second and a third light emitter that are sequentially switched.

### Patent Literature

Patent Literature 1: Japanese Patent Application Laid-Open Publication No. 2009-266804

### Disclosure of the Invention

### [Problem to be Solved by the Invention]

However, with organic EL lighting devices, it is known that as accumulated light-emission time increases, the elements degrade, resulting in a decrease in luminance, and where they are made to emit light at low luminance like so-called all-night lights, there is the problem that it is difficult to finely adjust light-emission luminance to desired low luminance simply by controlling drive voltages or drive currents, because of variation in characteristics of the organic EL elements.

The above fault can be cited as an example of the problem to be solved by the invention, and an object of the present invention is to provide a lighting device and luminance adjusting method which easily enables fine adjustment of luminance in a light-emission mode in which the light emitting part is made to emit light at low luminance.

### [Means for Solving the Problem]

The above problem is solved by a lighting device in accordance with claim 1 and a luminance adjusting method in accordance with claim 7.

According to the lighting device of the invention according to claim 1 and the luminance adjusting method of the invention according to claim 7, if the set luminance is less than or equal to threshold luminance that is less than the upper limit of the luminance range, a light emitting element of the plurality of light emitting elements of the light emitting part is controlled not to emit light so that not all the light emitting elements of the light emitting part are used, that is, light emission is controlled so as to achieve the set luminance by means of light emission of only light emitting elements other than the some light emitting elements. Hence, fine adjustment of luminance can be easily performed even in a light emission mode in which to make elements emit light at low luminance. Further, because the light emitting element in the non-light emission state is changed among the plurality of light emitting elements intermittently, degradation progressing in only some light emitting elements is prevented, and thus luminance variation in the regions of the light emitting face can be prevented.

### Brief Description of Drawings

FIG. 1 is a block diagram showing the configuration of a lighting device that is an embodiment of the present invention;
FIG. 2 is a plan view showing the four regions of a light emitting face of the lighting device of FIG. 1;
FIG. 3 is a cross-sectional view showing the element structure of a light emitting panel part of the lighting device of FIG. 1;
FIG. 4 is a flow chart showing the control operation of the lighting device of FIG. 1;
FIG. 5 is a diagram showing example change in the light emission state of the light emitting panel part;
FIG. 6 is a diagram showing example change in the light emission state of another light emitting panel part; and
FIG. 7 is a diagram showing the chromaticity, drive lifetimes, and luminance ratios at color temperatures of 5000 K, 3000 K, and 2500 K of a red light emitting element, green light emitting element, and blue light emitting element of the light emitting panel part.

### Detailed Description of the Invention

### Embodiments

Embodiments of the present invention will be described in detail below with reference to the drawings.

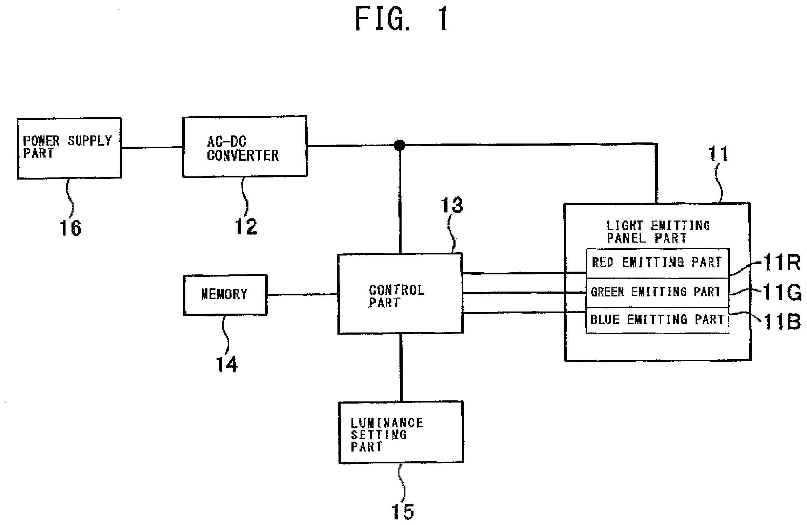

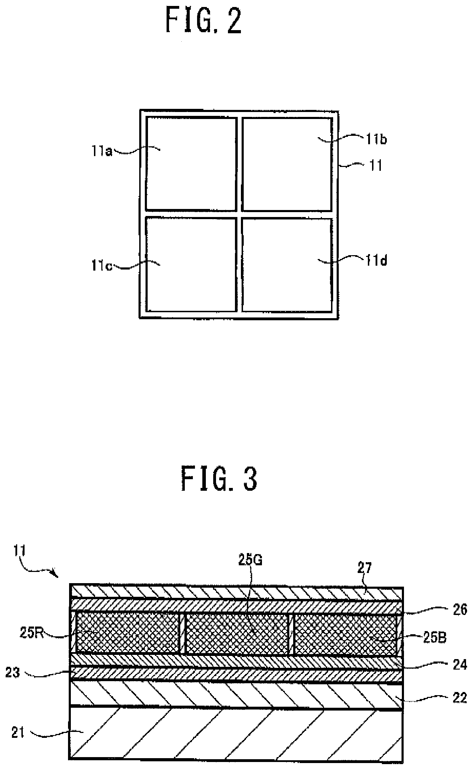

FIG. 1 shows the configuration of a lighting device that is an embodiment of the present invention. This lighting device comprises a color light emitting panel part 11 including organic EL elements as light emitting elements. The light emitting panel part 11 has its square light emitting face divided into four equal parts and has four regions 11a to 11d as shown in FIG. 2. This regional division corresponds to the grouping of a plurality of light emitting elements contained in the light emitting panel part 11. Although in this embodiment the four regions 11a to 11d are in a square shape, they may be in another shape such as a triangle or circle and also need not be equally divided parts.

The light emitting panel part 11 has a structure in which an anode 22, a hole injection layer 23, a hole transporting layer 24, RGB light emitting layers 25R, 25G, 25B, an electron transporting layer 26, and a cathode 27 are laid one over another in that order on a glass substrate 21 as shown in FIG 3. The anode 22 is constituted by, e.g., an ITO film of 70 nm thickness formed by sputtering. The hole injection layer 23 is made of CuPc and 20 nm thick. The hole transporting layer 24 is made of NPB and 20 nm thick. The R (red) light emitting layer 25R includes CPB as a host material and Ir(phq)₂tpy as a dopant; the G (green) light emitting layer 25G includes CPB as a host material and Ir(ppy)₃ as a dopant; and the B (blue) light emitting layer 25B includes PAND as a host material and DPAVBi as a dopant. The thicknesses of the RGB light emitting layers 25R, 25G, 25B are 40 nm. The electron transporting layer 26 is made of NBphen doped with CsxMoOx and 30 nm thick. The cathode 27 is constituted by an Al film of 70 to 100 nm thickness. Note that this internal structure of the light emitting panel part 11 is an illustrative example and that the present invention is not limited to this.

In the light emitting panel part 11, each of the regions 11a to 11d comprises multiple sets of a red light emitting element 11R, a green light emitting element 11G, and a blue light emitting element 11B that are distinguished by the RGB light emitting layers 25R, 25G, 25B.

The lighting device comprises an AC-DC converter 12, a control part 13, a memory 14, and a luminance setting part 15. The AC-DC converter 12 converts an alternating voltage from a power supply part 16 into a direct-current voltage and outputs this. The power supply part 16 is, for example, a commercial power supply. The output voltage of the AC-DC converter 12 is supplied as a direct-current power supply to the light emitting panel part 11 and the control part 13. The control part 13 is constituted by, e.g., a CPU and controls the light emission of the light emitting panel 11 on a region 11a to 11d basis. The control of the control part 13 includes luminescent color control as well as luminance control, and the control part 13 can control the red light emitting element 11R, the green light emitting element 11G, and the blue light emitting element 11B individually.

The memory 14 and the luminance setting part 15 as well as the light emitting panel part 11 are connected to the control part 13. The memory 14 stores programs and data necessary for the control of the control part 13. The luminance setting part 15 sets the luminance of the entire light emitting panel part 11 according to the operation of a user. In the luminance setting part 15, the luminance can be set at any level within a predetermined luminance range (a lower limit to an upper limit of luminance). A power on/off switch for this lighting device may be provided in the luminance setting part 15. Note that luminance set by the luminance setting part 15 is hereinafter called set luminance.

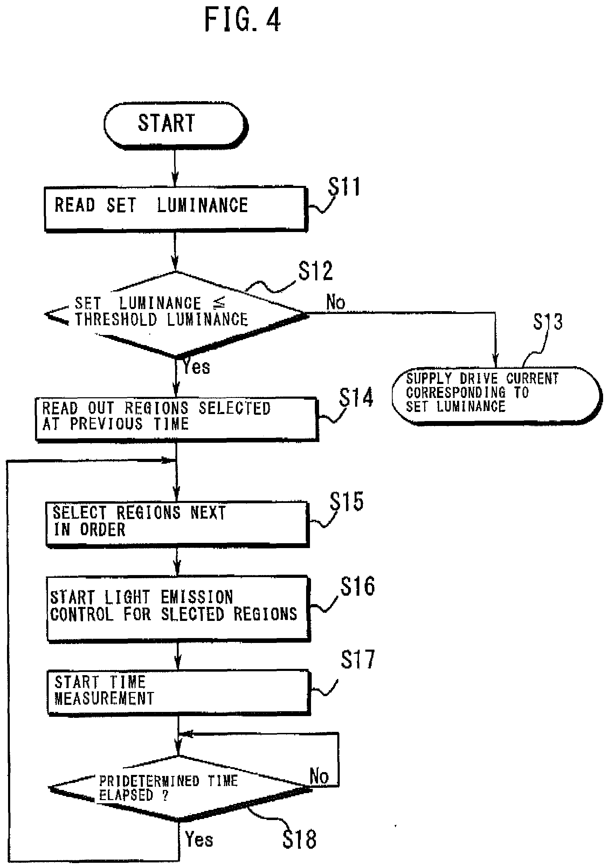

Next, the control operation of the lighting device having this configuration will be described using the flow chart of FIG. 4.

After the luminance of the entire panel is set by the luminance setting part 15, the control part 13 reads the set luminance (step S11) and determines whether or not the set luminance is less than or equal to threshold luminance (step S12). The threshold luminance is a luminance within the above luminance range and less than the upper limit of luminance. The luminance less than or equal to the threshold luminance is, for example, a luminance in an all-night light mode range. If the set luminance is greater than the threshold luminance, drive current corresponding to the set luminance is supplied to the light emitting elements 11R, 11G, 11B of the four regions 11a to 11d (step S13). That is, the light emitting elements 11R, 11G, 11B of all the regions 11a to 11d of the light emitting panel part 11 are driven, and the drive current is controlled such that light emission at the set luminance is obtained from the light emitting elements 11R, 11G, 11B of all those regions 11a to 11d. Note that the relations between the set luminance and the respective drive currents of the light emitting elements for the case of driving the light emitting elements of the four regions are stored beforehand as first data in the memory 14 and that the control part 13 controls the drive currents with use of the first data.

In contrast, if the set luminance is less than the threshold luminance, the regions that were selected at the previous time are read out from the memory 14 (step S14). Then, the regions next to the regions read out at step S14 in order are selected from among the four regions 11a to 11d (step S15).

In the case of light emission at luminance less than or equal to the threshold luminance, the light emitting elements of two regions from among the four regions 11a to 11d are used for light emission. The order of region selection is, for example, the order of the regions 11a and 11d and the regions 11b and 11c, which order is repeated. When the regions read out at step S14 are the regions 11a and 11d, the regions 11b and 11c are selected at step S 15.

After selecting new regions at step S15, the control part 13 starts light emission control for the selected regions (step S16). At step S16, drive current corresponding to the set luminance of step S13 is supplied to the light emitting elements belonging to the selected two regions. The light-emission luminance of the light emitting elements of the selected two regions is controlled to be less than light-emission luminance at the upper limit of luminance. For example, because the light-emission luminance is obtained by multiplying the area of the regions in a light emission state by luminance per unit area, if the relation between the luminance per unit area and the drive current value has been determined, the drive current value corresponding to the set luminance can be decided on for each area of the regions to be in a light emission state. Further, the drive current for the light emitting elements 11R, 11G, 11B of the two regions is adjusted such that color temperature becomes 2500 to 3500 K. This adjustment is performed such that the color temperature is, for example, 2500 to 3500 K. As such, the drive current is controlled such that light emission at the set luminance is performed by only the light emitting elements 11R, 11G, 11B belonging to the selected two regions. Note that the relations between the set luminance and the respective drive currents of the light emitting elements for the case of driving the light emitting elements of the two regions is stored beforehand as second data in the memory 14 and that the control part 13 controls the drive current with use of the second data.

Then, the control part 13 starts time measurement (step S17) and determines whether the measured time has exceeded a predetermined time (step S18). The predetermined time is, for example, three hours, but not being limited to this, may be one hour or six hours or longer. If the measured time has not exceeded the predetermined time, light emission control for the selected regions continues. Although in this embodiment the predetermined time is a fixed time period, it does not have to be a fixed time period.

When determining that the measured time has exceeded the predetermined time, the control part 13 returns to step S15 to select the next regions in order and executes light emission control for the newly selected regions at the next step S16.

If a change to the luminance setting by the luminance setting part 15 has occurred during the execution of steps S11 to S18, the control part 13 resumes the process starting with step S11 by, e.g., an interruption.

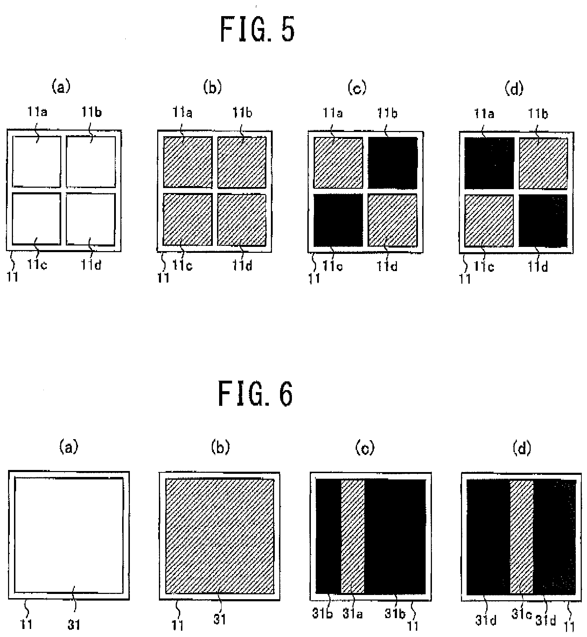

Because the control part 13 executes this control operation, when in the luminance setting part 15 the set luminance is gradually decreased from the upper limit of luminance within the above luminance range according to the operation of a user, the light emission state of the light emitting panel part 11 can be changed as shown in, e.g., FIG. 5 (a) to (d). That is, first, when the luminance is set at a luminance within the above luminance range and close to the upper limit of luminance, all the light emitting elements of the regions 11a to 11d emit light at high luminance as shown in FIG. 5 (a). When the set luminance is decreased to be greater than the threshold luminance, all the light emitting elements of the regions 11a to 11d emit light but at decreased overall luminance as shown in FIG. 5 (b). When the set luminance is further decreased to be less than or equal to the threshold luminance, the light emitting elements of the regions 11a and 11d emit light with the light emitting elements of the regions 11b and 11c being in a non-light emission state as shown in FIG. 5 (c). The drive current is controlled such that light emission at the set luminance is obtained with only the light emitting elements 11R, 11G, 11B of the two regions. When a predetermined time has elapsed with the set luminance being maintained less than or equal to the threshold luminance, the light emitting elements of the regions 11a and 11d are put in a non-light emission state, and instead the light emitting elements of the regions 11b and 11c emit light as shown in FIG. 5 (d). In other words, the light emitting elements of regions in the non-light emission state are replaced with other ones of the light emitting elements of the light emitting panel part 11 each time the predetermined time has elapsed.

According to the lighting device of the above embodiment, where the luminance is set to be less than or equal to the threshold luminance, the light emitting elements of the regions 11a to 11d are controlled to emit light in a balanced manner without a state in which only the light emitting elements of a specific region of the light emitting panel part 11 always emit light, and hence the burn-in of only a specific region can be lessened. Further, because the degradation of the light emitting elements of the regions 11a to 11d of the light emitting panel part 11 progresses evenly, luminance deviation and color deviation between the regions of the light emitting panel part 11 can be prevented.

Further, according to the lighting device of the above embodiment, if the set luminance is less than or equal to the threshold luminance, then only the light emitting elements of some regions of the regions 11a to 11d emit light, and hence the fine adjustment of light-emission luminance in a low luminance range can be easily performed.

Yet further, according to the lighting device of the above embodiment, at the same time that only the light emitting elements of some regions of the regions 11a to 11d emit light, by color-toning such that the color temperature of the light emission is 2500 to 3500 K, a light-emission color suitable for use as an all-night light can be obtained. Further, while surface emission is one of the features of organic EL lighting devices, at bedtime, the smaller lighting area can lessen glare and uncomfortable feeling.

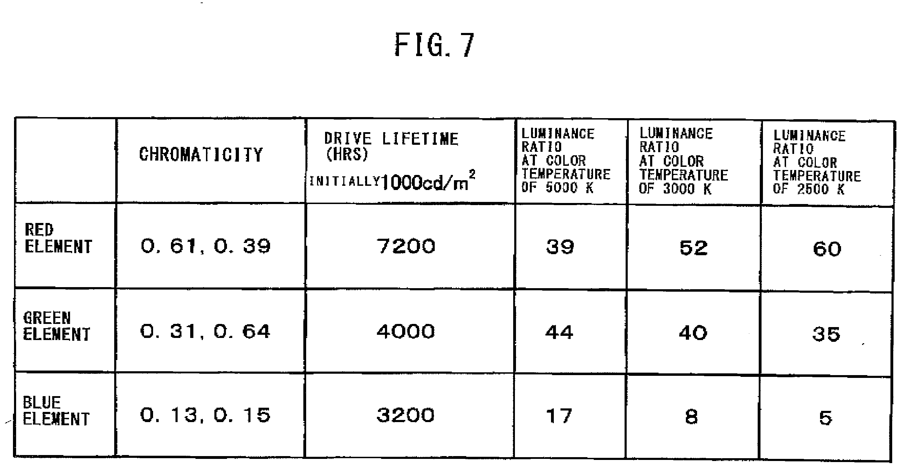

Although in the above embodiment the light emitting face of the light emitting panel part 11 is divided into the regions 11a to 11d beforehand, the present invention not being limited to this, a single continuous light emitting face may be divided into light emitting elements of regions in the light emission state and light emitting elements of regions in the non-light emission state by the control of the control part 13. For example, where the light emitting surface of the light emitting panel part 11 is not formed being divided into regions beforehand but is a single continuous light emitting face, the light emission state of the light emitting panel part 11 can be changed as shown in FIG. 6 (a) to (d). That is, first, when the luminance is set at a luminance within the above luminance range and close to the upper limit of luminance, the light emitting elements of the entire area 31 of the light emitting face of the light emitting panel part 11 emit light at high luminance as shown in FIG. 6 (a). When the set luminance is decreased to be greater than the threshold luminance, the light emitting elements of the entire area 31 emit light but at decreased overall luminance as shown in FIG. 6 (b). When the set luminance is further decreased to be less than or equal to the threshold luminance, the light emitting surface is divided into an area 31a in the light emission state and an area 31b in the non-light emission state by the control of the control part 13. That is, the light emitting elements of the area 31a and the light emitting elements of the area 31b in the non-light emission state are controlled separately. The drive current is controlled such that light emission at the set luminance is obtained with only the light emitting elements of the area 31a in the light emission state, whereas drive current is not supplied to the light emitting elements of the area 31b in the non-light emission state. When a predetermined time has elapsed with the set luminance being maintained less than or equal to the threshold luminance, an area 31c in the light emission state and an area 31d in the non-light emission state, the two areas differing in position from the areas 31a, 31b, are formed as shown in FIG. 6 (d). As such, in the present invention, the light emitting elements in the non-light emission state need only be replaced with other ones of the light emitting elements of the entire area 31 each time the predetermined time has elapsed. When the light emitting elements in the non-light emission state are replaced, there may be some overlap between the light emitting elements in the non-light emission state before the replacement and the ones in the non-light emission state after the replacement, and in addition the size of the area in the non-light emission state, that is, the number of light emitting elements in the non-light emission state may change between before and after the replacement. FIG. 7 shows the chromaticity, drive lifetimes, and luminance ratios at color temperatures of 5000 K, 3000 K, and 2500 K of the above red light emitting element 11R, green light emitting element 11G, and blue light emitting element 11B. The drive lifetime is a value at a luminance 30% lower than the upper limit of luminance. It is found out from FIG. 7 that as the color temperature decreases, the luminance ratio of the blue light emitting element having a shorter drive lifetime decreases, whereas that of the red light emitting element having a longer drive lifetime increases. Hence, by color-toning such that the color temperature is 2500 to 3500 K, the lifetime of the light emitting panel part can be made longer, and at the same time, a light-emission color suitable as an all-night light can be obtained as described previously.

Although in the above embodiments organic EL elements are used as the light emitting elements of the light emitting panel part 11, the present invention is not limited to this, other light emitting elements such as LEDs can be used. Further, the light emitting part of the present invention may be, for example, a sphere-shaped light emitting part other than a light emitting panel. Although in the above embodiments the light-emission color can be adjusted, the light-emission color may be fixed at a predetermined color.

### Reference Signs List

- 11: Color light emitting panel part
- 12: AC-DC converter
- 13: Control part
- 14: Memory
- 15: Luminance setting part
- 16: Power supply part

## Claims

1. A lighting device comprising:
a color light emitting part (11) including a plurality of light emitting elements (11R, 11G, 11B) each belonging to any one group among a plurality of groups; a luminance setting part (15) for setting luminance in a predetermined luminance range; and a control part (13) controlling light emission of said plurality of light emitting elements (11R, 11G, 11B) according to the luminance set by said luminance setting part (15),
wherein said control part includes:
a selecting means (13) for selecting light emitting elements (11R, 11G, 11B) belonging to one group among said plurality of groups if the luminance set by said luminance setting part is less than or equal to a threshold luminance that is less than the upper limit of said luminance range,
a light emission control means (13) for controlling said light emitting elements (11R, 11G, 11B) selected by said selecting means to emit light and controlling remaining light emitting elements (11R, 11G, 11B) other than said light emitting elements (11R, 11G, 11B) selected among said plurality of light emitting elements (11R, 11G, 11B) not to emit light, and
a time measuring means (13) for measuring a continued time from the start of light emission control of said light emitting elements (11R, 11G, 11B) selected, by said light emission control means, and
wherein when a measured time by said time measuring means has reached a predetermined time said selecting means selects light emitting elements (11R, 11G, 11B) belonging to a different one group from the group selected at a previous time and said light emission control means controls said light emitting elements (11R, 11G, 11B) belonging to said different one group selected by said selecting means to emit light and controls remaining light emitting elements (11R, 11G, 11B) other than said light emitting elements (11R, 11G, 11B) belonging to said different one group among said plurality of light emitting elements (11R, 11G, 11B) not to emit light,
**characterized in that** each of said plurality of light emitting elements (11R, 11G, 11B) is capable of color-toning within a range of color temperature of at least 2500 K to 5000 K and said light emission control means controls the light emitting elements (11R, 11G, 11B) which are in a light emission state such that the color temperature thereof is 2500 K to 3000 K if the luminance set by said luminance setting part (15) is less than or equal to said threshold luminance.

2. A lighting device according to claim 1, wherein if the luminance set by said luminance setting part (15) is less than or equal to said threshold luminance, said light emitting control means controls said light emitting elements (11R, 11G, 11B) of said light emission state so as to achieve the luminance set by said luminance setting part (15)

3. A lighting device according to claim 1 or 2, wherein said light emitting part (11) has divided light emitting faces corresponding to said plurality of groups.

4. A lighting device according to claim 1 or 2, wherein said light emitting part (11) has a light emitting face formed as a single continuous surface corresponding to said plurality of light emitting elements (11R, 11G, 11B).

5. A lighting device according to claim 1 or 2, wherein said light emission control means is operative to average frequencies of use of said plurality of light emitting elements (11R, 11G, 11B) by performing the light emission control of said light emitting elements (11R, 11G, 11B) belonging to said different one group selected by said selecting means at intervals of said predetermined period.

6. A lighting device according to any one of claims 1 to 5, wherein said light emitting part (11) comprises a light emitting panel having organic ElectroLuminescence elements as said light emitting elements (11R, 11G, 11B).

7. A luminance adjusting method for a lighting device comprising a color light emitting part (11) including a plurality of light emitting elements (11R, 11G, 11B) each belonging to any one group among a plurality of groups, comprising:
a luminance setting step of setting luminance in a predetermined luminance range; and
a control step of controlling light emission of said plurality of light emitting elements (11R, 11B) according to the luminance set by said luminance setting step,
wherein said control step includes: a selecting step of selecting light emitting elements (11R, 11G, 11B) belonging to one group among said plurality of groups if the luminance set by said luminance setting step is less than or equal to a threshold luminance that is less than the upper limit of said luminance range,
a light emission control step of controlling said light emitting elements (11R, 11G, 11B) selected by said selecting step to emit light and controlling remaining light emitting elements (11R, 11G, 11B) other than said light emitting elements (11R, 11G, 11B) selected among said plurality of light emitting elements (11R, 11G, 11B) not to emit light, and
a time measuring step of measuring a continued time from the start of light emission control of said light emitting elements (11R, 11G, 11B) selected, by said light emission control step, and
wherein when a measured time by said time measuring step has reached a predetermined time, light emitting elements (11R, 11G, 11B) belonging to a different one group from the group selected at a previous time are selected in said selecting step and in said light emission control step said light emitting elements (11R, 11G, 11B) belonging to said different one group selected by said selecting step are controlled to emit light and remaining light emitting elements (11R, 11G, 11B) other than said light emitting elements (11R, 11G, 11B) belonging to said different one group among said plurality of light emitting elements (11R, 11G, 11B) are controlled not to emit light,
**characterized in that** each of said plurality of light emitting elements (11R, 11G, 11B) is capable of color-toning within a range of color temperature of at least 2500 K to 5000 K and the light emitting elements (11R, 11G, 11B) which are in a light emission state are controlled in said light emission control step such that the color temperature thereof is 2500 K to 3000 K if the luminance set by said luminance setting step is less than or equal to said threshold luminance.

## Patentansprüche

1. Beleuchtungsvorrichtung, umfassend:
ein Farblicht emittierendes Teil (11), das eine Mehrzahl von Licht emittierenden Elementen (11R, 11G, 11B) aufweist, die jeweils zu einer Gruppe aus einer Mehrzahl von Gruppen gehören; ein Luminanzeinstellteil (15) zum Einstellen der Luminanz in einem vorbestimmten Luminanzbereich; und ein Steuerteil (13), das eine Lichtemission der Mehrzahl von Licht emittierenden Elementen (11R, 11G, 11b) gemäß der von dem Luminanzeinstellteil (15) eingestellten Luminanz steuert,
wobei das Steuerteil umfasst:
ein Auswahlmittel (13) zum Auswählen Licht emittierender Elemente (11R, 11G, 11B), die zu einer Gruppe aus der Mehrzahl von Gruppen gehören, falls die von dem Luminanzeinstellteil eingestellte Luminanz kleiner als oder gleich einer Schwellenluminanz ist, die kleiner als die obere Grenze des Luminanzbereiches ist,
ein Lichtemissionssteuermittel (13) zum Steuern der Licht emittierenden Elemente (11R, 11G, 11B), die von dem Auswahlmittel gewählt sind, um Licht zu emittieren, und zum Steuern verbleibender Licht emittierender Elemente (11R, 11G, 11B), die von den Licht emittierenden Elementen (11R, 11G, 11B) verschieden sind, die aus der Mehrzahl Licht emittierender Elemente (11R, 11G, 11B) gewählt sind, kein Licht zu emittieren, und
ein Zeitmessmittel (13) zum Messen einer fortgesetzten Zeitdauer von dem Start der Lichtemissionssteuerung der Licht emittierenden Elemente (11R, 11G, 11B), die durch das Lichtemissionssteuermittel gewählt sind, und
wobei, wenn eine von dem Zeitmessmittel gemessene Zeit eine vorbestimmte Zeit erreicht hat, das Auswahlmittel Licht emittierende Elemente (11R, 11G, 11B) wählt, die zu einer von der Gruppe, die zu einem vorhergehenden Zeitpunkt gewählt wurde, verschiedenen Gruppe gehören, und das Lichtemissionssteuermittel die Licht emittierenden Elemente (11R, 11G, 11B), die zu der anderen Gruppe gehören, die von dem Auswahlmittel gewählt ist, steuert, um Licht zu emittieren, und verbleibende Licht emittierende Elemente (11R, 11G, 11B), die von den Licht emittierenden Elementen (11R, 11G, 11B) verschieden sind, die zu der anderen Gruppe gehören, aus der Mehrzahl Licht emittierender Elemente (11R, 11G, 11B) steuert, kein Licht zu emittieren, **dadurch gekennzeichnet, dass** jedes der Mehrzahl Licht emittierender Elemente (11R, 11G, 11B) zur Farbtönung innerhalb eines Bereichs einer Farbtemperatur von zumindest 2500 K bis 5000 K in der Lage ist und das Lichtemissionssteuermittel die Licht emittierenden Elemente (11R, 11G, 11B) steuert, die in einem Lichtemissionszustand sind, so dass die Farbtemperatur derselben 2500 K bis 3000 K beträgt, wenn die von dem Luminanzeinstellteil (15) eingestellte Luminanz kleiner als oder gleich der Schwellenluminanz ist.

2. Beleuchtungsvorrichtung nach Anspruch 1, wobei, falls die von dem Luminanzeinstellteil (15) eingestellte Luminanz kleiner als oder gleich der Schwellenluminanz ist, das Lichtemissionssteuermittel die Licht emittierenden Elemente (11R, 11G, 11B) des Lichtemissionszustandes so steuert, dass die von dem Luminanzeinstellteil (15) eingestellte Luminanz erreicht wird.

3. Beleuchtungsvorrichtung nach einem der Ansprüche 1 oder 2, wobei das Lichtemissionsteil (11) geteilte Licht emittierende Seiten aufweist, die der Mehrzahl von Gruppen entsprechen.

4. Beleuchtungsvorrichtung nach einem der Ansprüche 1 oder 2, wobei das Licht emittierende Teil (11) eine Licht emittierende Seite aufweist, die als eine einzelne kontinuierliche Fläche geformt ist, die der Mehrzahl Licht emittierender Elemente (11R, 11G, 11B) entspricht.

5. Beleuchtungsvorrichtung nach einem der Ansprüche 1 oder 2, wobei das Lichtemissionssteuermittel dazu dient, Frequenzen zur Verwendung der Mehrzahl von Licht emittierenden Elementen (11R, 11G, 11B) durch Ausführung der Lichtemissionssteuerung der Licht emittierenden Elemente (11R, 11G, 11B), die zu der anderen Gruppe gehören, die von dem Auswahlmittel gewählt ist, zu Intervallen der vorbestimmten Periode zu mitteln.

6. Beleuchtungsvorrichtung nach einem der Ansprüche 1 bis 5, wobei das Licht emittierende Teil (11) eine Licht emittierende Tafel umfasst, die organische Elektrolumineszenzelemente als die Licht emittierenden Elemente (11R, 11G, 11B) aufweist.

7. Luminanzeinstellverfahren für eine Beleuchtungsvorrichtung, die ein Farblicht emittierendes Teil (11) umfasst, das eine Mehrzahl Licht emittierender Elemente (11R, 11G, 11B) aufweist, die jeweils zu einer Gruppe aus einer Mehrzahl von Gruppen gehören, umfassend:
einen Luminanzeinstellschritt zum Einstellen einer Luminanz in einem vorbestimmten Luminanzbereich; und
einen Steuerschritt zum Steuern der Lichtemission der Mehrzahl Licht emittierender Elemente (11R, 11G, 11B) gemäß der von dem Luminanzeinstellschritt eingestellten Luminanz,
wobei der Steuerschritt umfasst: einen Auswahlschritt zum Auswählen Licht emittierender Elemente (11R, 11G, 11B), die zu einer Gruppe aus der Mehrzahl von Gruppen gehören, falls die von dem Luminanzeinstellschritt eingestellte Luminanz kleiner oder gleich einer Schwellenluminanz ist, die kleiner als die obere Grenze des Luminanzbereichs ist,
einen Lichtemissionssteuerschritt zum Steuern der Licht emittierenden Elemente (11R, 11G, 11B), die von dem Auswahlschritt gewählt sind, um Licht zu emittieren, und zum Steuern verbleibender Licht emittierender Elemente (11R, 11G, 11B), die von den Licht emittierenden Elementen (11R, 11G, 11B) verschieden sind, die aus der Mehrzahl Licht emittierender Elemente (11R, 11G, 11B) gewählt sind, kein Licht zu emittieren, und
einen Zeitmessschritt zum Messen einer fortgesetzten Zeitdauer von dem Start einer Lichtemissionssteuerung der Licht emittierenden Elemente (11R, 11G, 11B), die von dem Lichtemissionssteuerschritt gewählt sind, und
wobei, wenn eine von dem Zeitmessschritt gemessene Zeit eine vorbestimmte Zeit erreicht hat, Licht emittierende Elemente (11R, 11G, 11B), die zu einer von der Gruppe, die zu einer vorhergehenden Zeit gewählt wurde, verschiedenen Gruppe gehören, in dem Auswahlschritt gewählt werden, und in dem Lichtemissionssteuerschritt die Licht emittierenden Elemente (11R, 11G, 11B), die zu der anderen Gruppe gehören, die von dem Auswahlschritt gewählt ist, gesteuert werden, um Licht zu emittieren, und verbleibende Licht emittierende Elemente (11R, 11G, 11B), die von den Licht emittierenden Elementen (11R, 11G, 11B) verschieden sind, die zu der anderen Gruppe gehören, aus der Mehrzahl Licht emittierender Elemente (11R, 11G, 11B) gesteuert werden, kein Licht zu emittieren,
**dadurch gekennzeichnet, dass** jedes der Mehrzahl Licht emittierender Elemente (11R, 11G, 11B) zur Farbtönung innerhalb eines Bereichs einer Farbtemperatur von zumindest 2500 K bis 5000 K in der Lage ist, um die Licht emittierenden Elemente (11R, 11G, 11B), die in einem Lichtemissionszustand sind, in dem Lichtemissionssteuerschritt so gesteuert werden, dass deren Farbtemperatur 2500 K bis 3000 K beträgt, wenn die von dem Luminanzeinstellschritt eingestellte Luminanz kleiner als oder gleich der Schwellenluminanz ist.

## Revendications

1. Dispositif d'éclairage comprenant :
une partie émettrice de lumière en couleurs (11) incluant une pluralité d'éléments émetteurs de lumière (11R, 11G, 11B) appartenant chacun à un groupe quelconque parmi une pluralité de groupes ; une partie de réglage de luminance (15) pour régler la luminance dans une plage de luminance prédéterminée ; et une partie de commande (13) qui commande l'émission de lumière de ladite pluralité d'éléments émetteurs de lumière (11R, 11G, 11B) en accord avec la luminance réglée par ladite partie de réglage de luminance (15),
dans lequel ladite partie de commande inclut :
un moyen de sélection (13) pour sélectionner des éléments émetteurs de lumière (11R, 11G, 11B) appartenant à un groupe parmi ladite pluralité de groupes si la luminance réglée par ladite partie de réglage de luminance est inférieure ou égale à une luminance seuil qui est inférieure à la limite supérieure de ladite plage de luminance,
un moyen de commande d'émission de lumière (13) pour commander lesdits éléments émetteurs de lumière (11R, 11G, 11B) sélectionnés par ledit moyen de sélection pour émettre de la lumière et commander les éléments émetteurs de lumière restants (11R, 11G, 11B) autres que lesdits éléments émetteurs de lumière (11R, 11G, 11B) sélectionnés parmi ladite pluralité d'éléments émetteurs de lumière (11R, 11G, 11B) pour ne pas émettre de lumière, et
un moyen de mesure de temps (13) pour mesurer un temps en continu depuis le démarrage de la commande d'émission de lumière desdits éléments émetteurs de lumière (11R, 11G, 11B) sélectionnés, par ledit moyen de commande d'émission de lumière, et
dans lequel quand un temps mesuré par ledit moyen de mesure de temps a atteint un temps prédéterminé ledit moyen de sélection sélectionne des éléments émetteurs de lumière (11R, 11G, 11B) appartenant à un groupe différent du groupe sélectionné à un temps précédent et ledit moyen de commande d'émission de lumière commande lesdits éléments émetteurs de lumière (11R, 11G, 11B) appartenant audit groupe différent sélectionnés par ledit moyen de sélection pour émettre de la lumière et commande les éléments émetteurs de lumière restants (11R, 11G, 11B) autres que lesdits éléments émetteurs de lumière (11R, 11G, 11B) appartenant audit groupe différent parmi ladite pluralité d'éléments émetteurs de lumière (11R, 11G, 11B) pour ne pas émettre de lumière,
**caractérisé en ce que** chacun de ladite pluralité d'éléments émetteurs de lumière (11R, 11G, 11B) est capable d'accorder la couleur dans une plage de température de couleur d'au moins 2500 K à 5000 K, et ledit moyen de commande d'émission de lumière commande les éléments émetteurs de lumière (11R, 11G, 11B) qui sont dans un état d'émission de lumière de telle façon que leur température de couleur est de 2500 K à 3000 K si la luminance réglée par ladite partie de réglage de luminance (15) est inférieure ou égale à ladite luminance seuil.

2. Dispositif d'éclairage selon la revendication 1, dans lequel si la luminance réglée par ladite partie de réglage de luminance (15) est inférieure ou égale à ladite luminance seuil, ledit moyen de commande d'émission de lumière commande lesdits éléments émetteurs de lumière (11R, 11G, 11B) dudit état d'émission de lumière de manière à atteindre la luminance réglée par ladite partie de réglage de luminance (15).

3. Dispositif d'éclairage selon la revendication 1 ou 2, dans lequel ladite partie d'émission de lumière (11) comporte des faces émettrices de lumière divisées qui correspondent à ladite pluralité de groupes.

4. Dispositif d'éclairage selon la revendication 1 ou 2, dans lequel ladite partie émettrice de lumière (11) présente une face émettrice de lumière formée comme une unique surface continue correspondant à ladite pluralité d'éléments émetteurs de lumière (11R, 11G, 11B).

5. Dispositif d'éclairage selon la revendication 1 ou 2, dans lequel ledit moyen de commande d'émission de lumière a pour fonction de faire une moyenne des fréquences d'utilisation de ladite pluralité d'éléments émetteurs de lumière (11R, 11G, 11B) en effectuant la commande d'émission de lumière desdits éléments émetteurs de lumière (11R, 11G, 11B) appartenant audit groupe différent sélectionné par ledit moyen de sélection à intervalles de ladite période prédéterminée.

6. Dispositif d'éclairage selon l'une quelconque des revendications 1 à 5, dans lequel ladite partie émettrice de lumière (11) comprend un panneau émetteur de lumière ayant des éléments électroluminescents organiques à titre d'éléments émetteurs de lumière (11R, 11G, 11B).

7. Procédé d'ajustement de luminance pour un dispositif d'éclairage comprenant une partie émettrice de lumière en couleurs (11) incluant une pluralité d'éléments émetteurs de lumière (11R, 11G, 11B) appartenant chacun à un groupe quelconque parmi une pluralité de groupes, comprenant :
une étape de réglage de luminance consistant à régler la luminance dans une plage de luminance prédéterminée ; et
une étape de commande consistant à commander l'émission de lumière de ladite pluralité d'éléments émetteurs de lumière (11R, 11G, 11B) en accord avec la luminance réglée par ladite étape de réglage de luminance,
dans lequel ladite étape de commande inclut : une étape de sélection consistant à sélectionner les éléments émetteurs de lumière (11R, 11G, 11B) appartenant à un groupe parmi ladite pluralité de groupes si la luminance réglée par ladite étape de réglage de luminance est inférieure ou égale à une luminance seuil qui est inférieure à la limite supérieure de ladite plage de luminance,
une étape de commande d'émission de lumière consistant à commander lesdits éléments émetteurs de lumière (11R, 11G, 11B) sélectionnés par ladite étape de sélection pour émettre de la lumière et à commander les éléments émetteurs de lumière restants (11R, 11G, 11B) autres que lesdits éléments émetteurs de lumière (11R, 11G, 11B) sélectionnés parmi ladite pluralité d'éléments émetteurs de lumière (11R, 11G, 11B) pour ne pas émettre de lumière, et
une étape de mesure de temps consistant à mesurer un temps continu depuis le démarrage de la commande d'émission de lumière desdits éléments émetteurs de lumière (11R, 11G, 11B) sélectionnés, par ladite étape de commande d'émission de lumière, et
dans lequel, quand un temps mesuré par ladite étape de mesure de temps a atteint un temps prédéterminé, les éléments émetteurs de lumière (11R, 11G, 11B) appartenant à un groupe différent du groupe sélectionné à un temps précédent, sont sélectionnés dans ladite étape de sélection et, dans ladite étape de commande d'émission de lumière lesdits éléments émetteurs de lumière (11R, 11G, 11B) appartenant audit groupe différent sélectionné par ladite étape de sélection sont commandés pour émettre de la lumière et les éléments émetteurs de lumière restants (11R, 11G, 11B) autres que lesdits éléments émetteurs de lumière (11R, 11G, 11B) appartenant audit groupe différent parmi ladite pluralité d'éléments émetteurs de lumière (11R, 11G, 11B) sont commandés pour ne pas émettre de lumière,
**caractérisé en ce que** chacun de ladite pluralité d'éléments émetteurs de lumière (11R, 11G, 11B) est capable de nuancer sa couleur à l'intérieur d'une plage de température de couleur d'au moins 2500 K à 5000 K, et les éléments émetteurs de lumière (11R, 11G, 11B) qui sont dans un état d'émission de lumière sont commandés dans ladite étape de commande d'émission de lumière de telle façon que leur température de couleur est de 2500 K à 3000 K si la luminance réglée par ladite étape de réglage de luminance est inférieure ou égale à ladite luminance seuil.
